# EUROPEAN PATENT APPLICATION

(11) **EP 4 397 989 A1**
(43) Date of publication of application: **10.07.2024**
(21) Application number: 22864353.2
(22) Date of filing: 24.08.2022
(51) Int. Cl.: G01S 5/02, G06T 7/70

(54) **POSITION ESTIMATION SYSTEM AND POSITION ESTIMATION METHOD**

(30) Priority: 31.08.2021 JP 2021140758
(71) Applicant: Panasonic Intellectual Property Management Co., Ltd., Osaka-shi, Osaka 571-0057 (JP)
(72) Inventor: KOGA, Tatsuo, Kadoma-shi, Osaka 571-0057 (JP); YOSHIZAWA, Jin, Kadoma-shi, Osaka 571-0057 (JP); URA, Kazuto, Kadoma-shi, Osaka 571-0057 (JP)
(74) Representative: Appelt, Christian W.
(86) International application number: PCT/JP2022/031809
(87) International publication number: WO 2023/032769

(57) **Abstract**

A position estimation system (10) includes: an obtainer (34) that obtains image information of an image showing an indoor space in which a person is located; an estimator (35) that estimates the coordinates of the person in the indoor space, on the basis of the image information obtained; and a position information obtainer (36) that obtains position information of a first communication device (41) from a positioning system (40). The estimator (35) estimates the coordinates of a target first communication device (41) held by the person, based on the coordinates of the person estimated and the position information obtained, and estimates the coordinates of an object other than the person in the indoor space, on the basis of a state of communication between a third communication device (50) held by the object and the target first communication device (41), and the coordinates of the target first communication device (41) estimated.

## Description

### [Technical Field]

The present invention relates to a position estimation system and a position estimation method.

### [Background Art]

Patent Literature (PTL) 1 discloses a positional information acquisition system that requires no input operation by a user and has a cost advantage.

### [Citation List]

### [Patent Literature]

[PTL 1] Japanese Unexamined Patent Application Publication No. 2015-152479

### [Summary of Invention]

### [Technical Problem]

The present invention provides a position estimation system and a position estimation method that are capable of estimating the coordinates of an object in a predetermined space.

### [Solution to Problem]

The position estimation system according to an aspect of the present invention includes: an obtainer that obtains information which is one of image information of an image showing a space in which a person is located or temperature distribution information of the space; an estimator that estimates coordinates of the person in the space, based on the information obtained; and a position information obtainer that obtains position information of each of one or more first communication devices located in the space from a positioning system that measures a position of the first communication device based on a state of communication between the first communication device and a plurality of second communication devices disposed in the space, wherein the estimator: estimates coordinates of a target first communication device held by the person, based on the coordinates of the person estimated and the position information obtained, the target first communication device being included in the one or more first communication devices; and estimates coordinates of an object other than the person in the space, based on a state of communication between a third communication device held by the object and the target first communication device, and the coordinates of the target first communication device estimated.

The position estimation method according to an aspect of the present invention includes: obtaining information which is one of image information of an image showing a space in which a person is located or temperature distribution information of the space; estimating coordinates of the person in the space, based on the information obtained; obtaining position information of each of one or more first communication devices located in the space from a positioning system that measures a position of the first communication device based on a state of communication between the first communication device and a plurality of second communication devices disposed in the space; estimating coordinates of a target first communication device held by the person, based on the coordinates of the person estimated and the position information obtained, the target first communication device being included in the one or more first communication devices; and estimating coordinates of an object other than the person in the space, based on a state of communication between a third communication device held by the object and the target first communication device, and the coordinates of the target first communication device estimated.

The program according to an aspect of the present invention is a program for causing a computer to execute the position estimation method.

### [Advantageous Effects of Invention]

The position estimation system and the position estimation method of the present invention are capable of estimating the coordinates of an object in a predetermined space.

### [Brief Description of Drawings]

[FIG. 1]

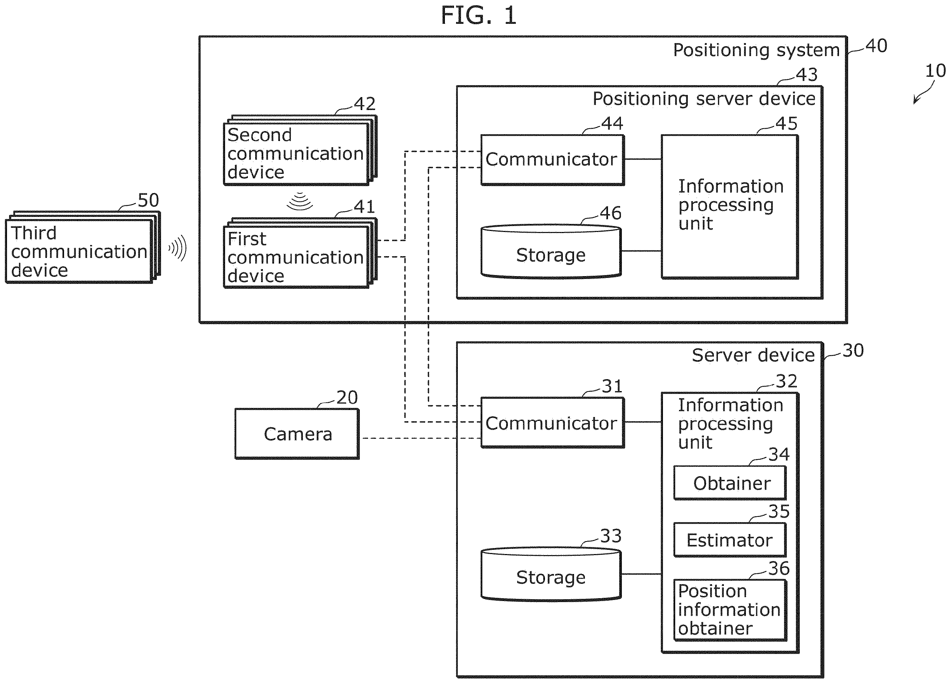

   FIG. 1 is a block diagram showing the functional configuration of a position estimation system according to Embodiment 1.
[FIG. 2]

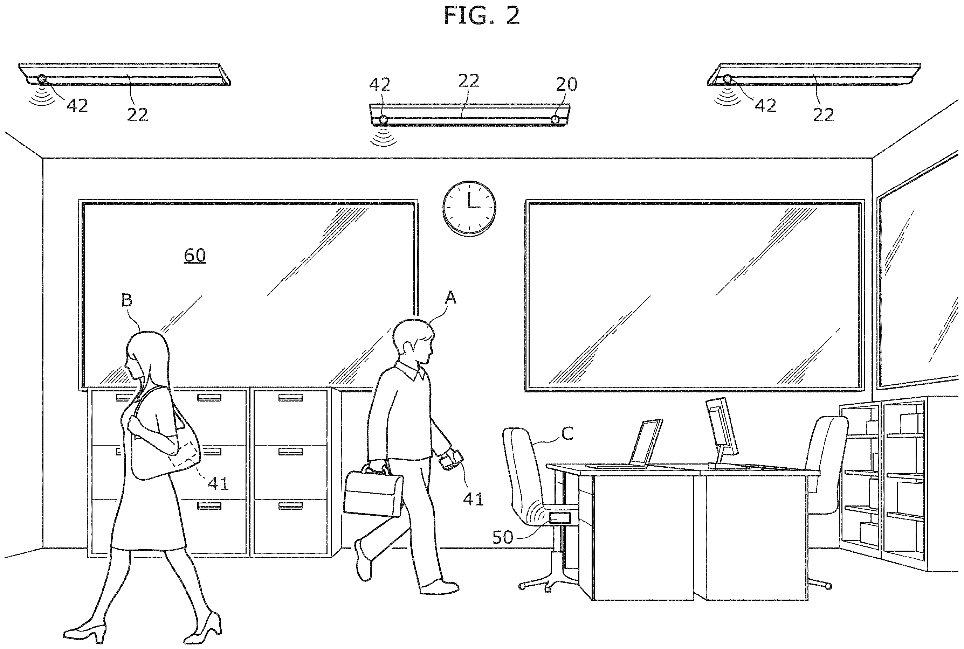

   FIG. 2 is a diagram showing an indoor space to which the position estimation system according to Embodiment 1 is applied.
[FIG. 3]

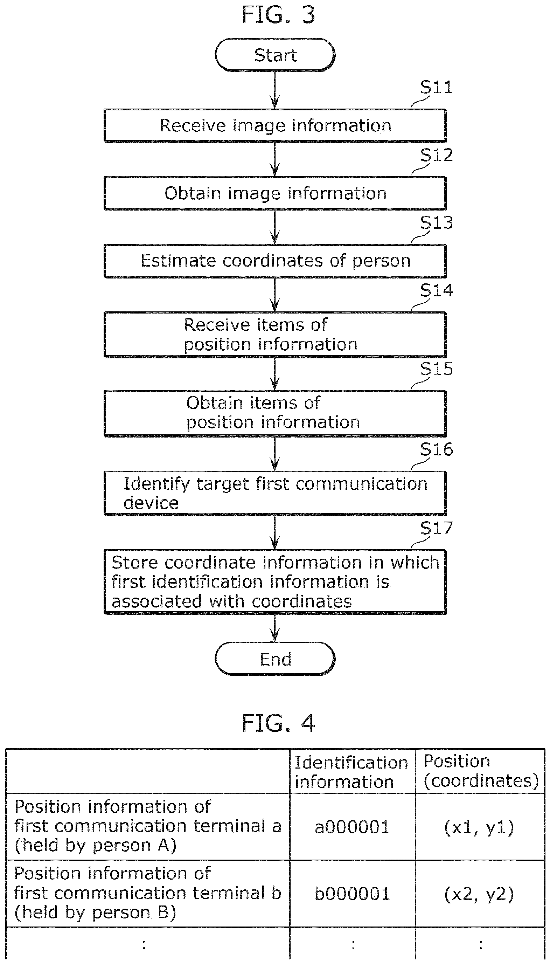

   FIG. 3 is a flowchart of example operation 1 of estimating the coordinates of a first communication device.
[FIG. 4]
   FIG. 4 is a diagram that schematically shows items of position information.
[FIG. 5]

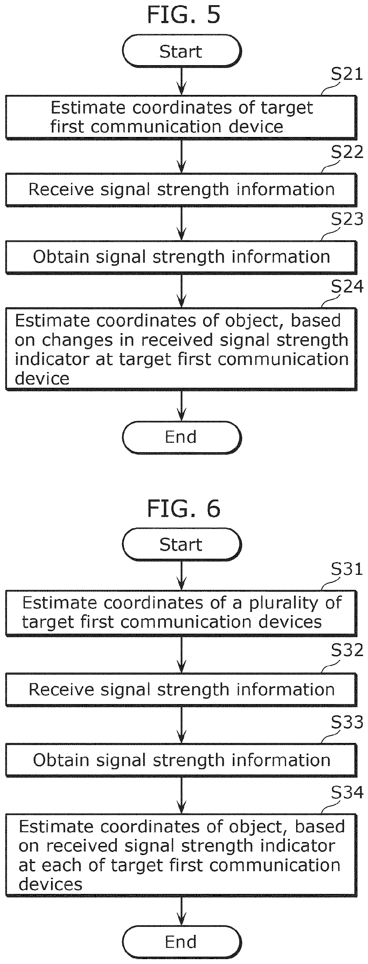

   FIG. 5 is a flowchart of example operation 1 of estimating the coordinates of an object.
[FIG. 6]
   FIG. 6 is a flowchart of example operation 2 of estimating the coordinates of an object.
[FIG. 7]

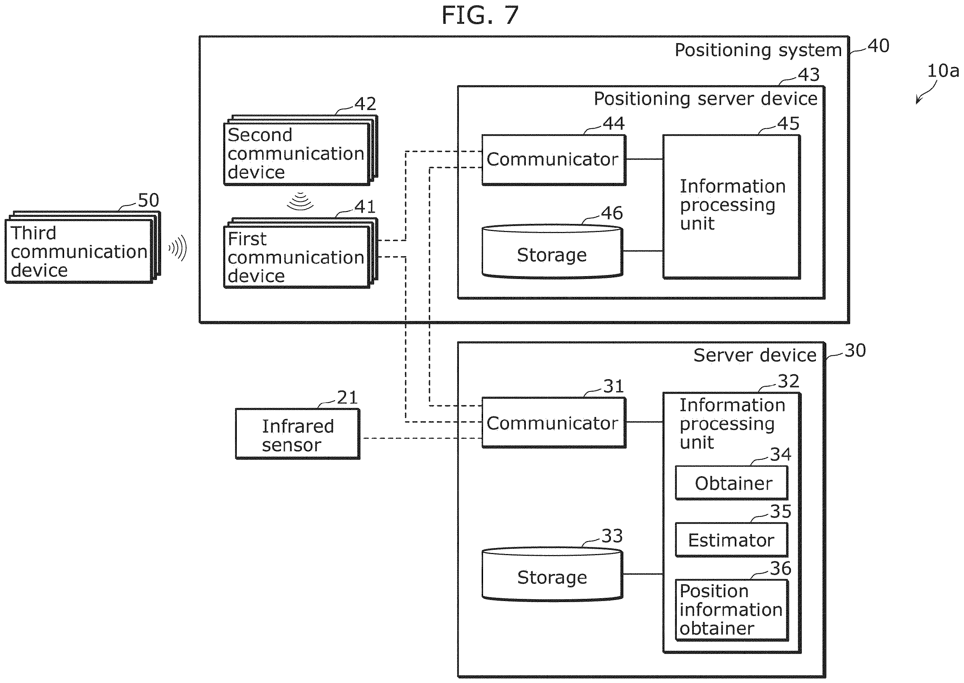

   FIG. 7 is a block diagram showing the functional configuration of a position estimation system according to Embodiment 2.
[FIG. 8]

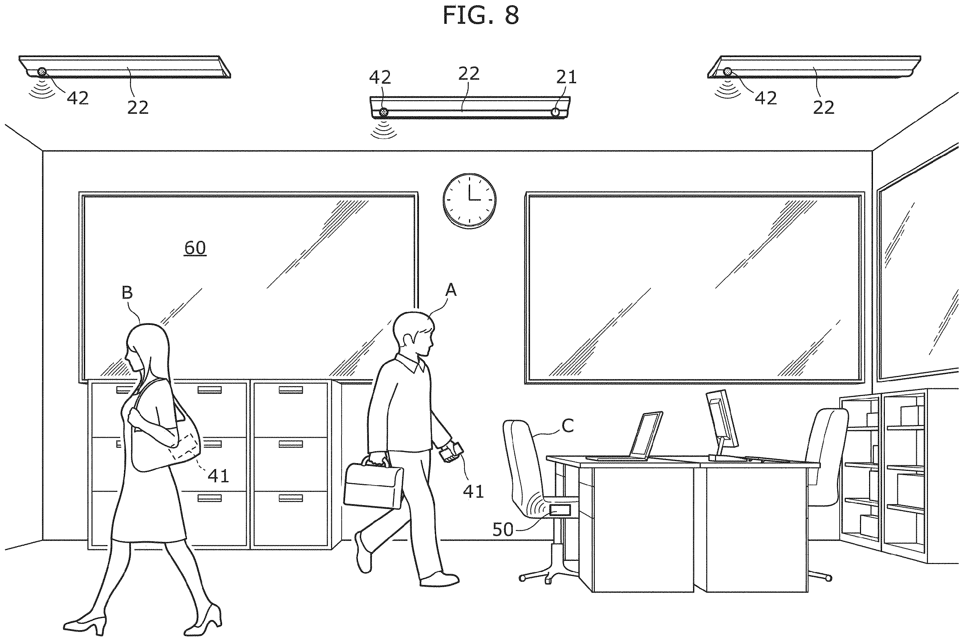

   FIG. 8 is a diagram showing an indoor space to which the position estimation system according to Embodiment 2 is applied.
[FIG. 9]

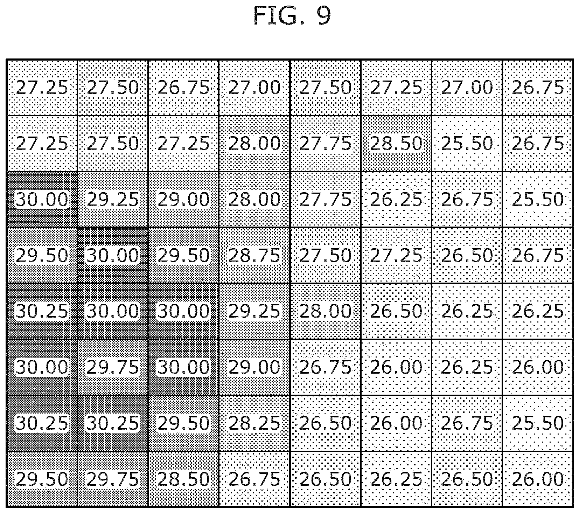

   FIG. 9 is a diagram that schematically shows a thermal image.
[FIG. 10]

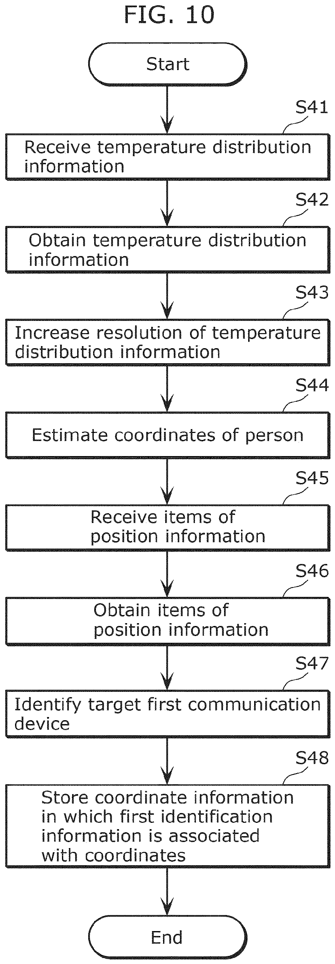

   FIG. 10 is a flowchart of example operation 2 of estimating the coordinates of a first communication device.
[FIG. 11]

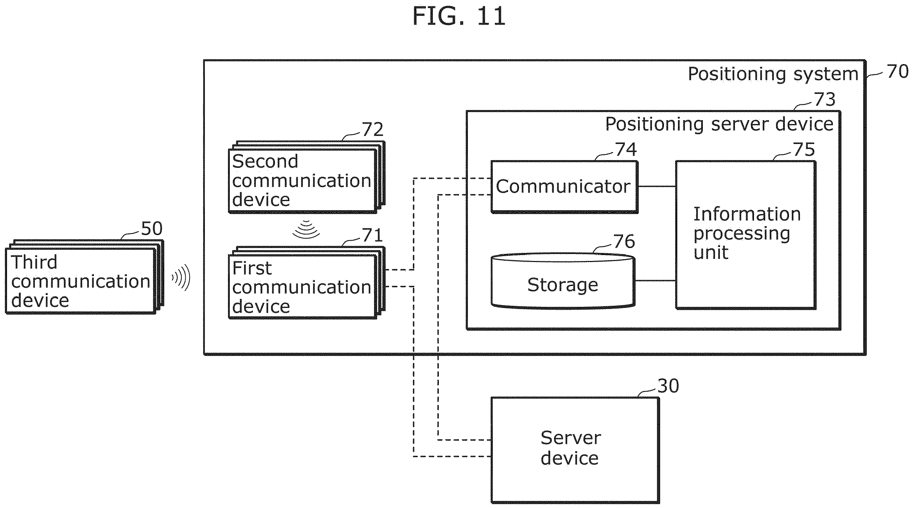

   FIG. 11 is a block diagram showing the functional configuration of a positioning system according to a variation.
[FIG. 12]

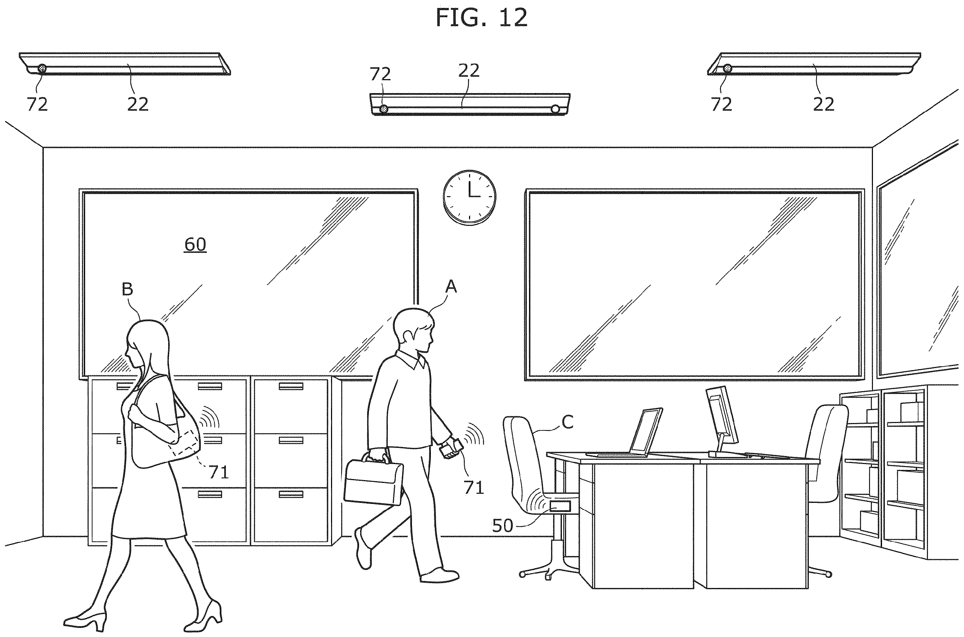

   FIG. 12 is a diagram showing an indoor space to which the positioning system according to the variation is applied.

### [Description of Embodiments]

Hereinafter, certain exemplary embodiments are described in greater detail with reference to the accompanying Drawings. Each of the exemplary embodiments described below shows a general or specific example. The numerical values, shapes, materials, elements, the arrangement and connection of the elements, steps, the processing order of the steps, etc. shown in the following exemplary embodiments are mere examples, and therefore do not limit the scope of the present invention. Therefore, among the elements in the following exemplary embodiments, those not recited in any one of the independent claims are described as optional elements.

The drawings are schematic views, and are not always strictly drawn. In the drawings, the same referential numerals are given to substantially the same configurations, and duplication of descriptions of the substantially the same configurations will be omitted or simplified in some cases.

### [Embodiment 1]

### [Configuration]

First, the configuration of the position estimation system according to Embodiment 1 is described. FIG. 1 is a block diagram showing the functional configuration of the position estimation system according to Embodiment 1. FIG. 2 is a diagram showing an indoor space to which the position estimation system according to Embodiment 1 is applied.

Position estimation system 10 is a system that obtains image information of an image of indoor space 60 outputted by camera 20, and estimates the coordinates of a target object among objects located in indoor space 60, on the basis of the obtained image information. Indoor space 60 is, for example, an office space, but may also be a space in a commercial facility or an indoor space in other facilities such as a space in a residence. The target object (object) is, for example, a living matter such as person A and person B, but may also be a tangible object such as chair C (object other than person, such as non-living matter).

As shown in FIG. 1 and FIG. 2, position estimation system 10 includes camera 20, server device 30, positioning system 40, and third communication device 50. Note that position estimation system 10 may include a plurality of cameras 20.

Camera 20 is disposed, for example, on the ceiling of indoor space 60, and captures an image of indoor space 60 from above. Camera 20 also transmits image information of the captured image to server device 30. The image captured by camera 20 is, for example, a still image. Camera 20 may also capture a moving image. In this case, an image captured by camera 20 is a still image that corresponds, for example, to one frame which constitutes the moving image. Camera 20 is implemented, for example, in the form of an image sensor.

As shown in FIG. 2, camera 20 is detachably connected, for example, to a power supply terminal included in lighting device 22 that is disposed on the ceiling of indoor space 60. Camera 20 operates on electric power supplied from lighting device 22. The power supply terminal is, for example, a universal serial bus (USB) terminal. Camera 20 may be fixed not via lighting device 22 but directly to the ceiling of indoor space 60. Camera 20 may also be fixed to a wall, for example, to capture an image of indoor space 60 from a lateral side.

Server device 30 obtains the image information generated by camera 20, and estimates the coordinates of the target object located in indoor space 60, on the basis of the obtained image information. Server device 30 is an edge computer provided in the facility (building) that includes indoor space 60, but may also be a cloud computer provided outside of such facility. Server device 30 includes communicator 31, information processing unit 32, and storage 33.

Communicator 31 is a communication module (communication circuit) used by server device 30 to communicate with camera 20 and positioning system 40 (more specifically, first communication device 41 and positioning server device 43). Communicator 31 receives, for example, the image information from camera 20. Communicator 31 also receives position information of each object located in indoor space 60 from positioning system 40. Communication performed by communicator 31 may either be wireless communication or wired communication. A communications standard used for the communication is not limited to a specific communications standard.

Information processing unit 32 obtains the image information received by communicator 31, and performs information processing for estimating the coordinates of the target object located in indoor space 60, on the basis of the obtained image information. Information processing unit 32 is more specifically implemented in the form of a processor or a microcomputer. Information processing unit 32 includes obtainer 34, estimator 35, and position information obtainer 36. The functions of obtainer 34, estimator 35, and position information obtainer 36 are realized by means of the processor or the microcomputer that forms information processing unit 32 executing a computer program stored in storage 33. The functions of obtainer 34, estimator 35, and position information obtainer 36 are described in more detail later.

Storage 33 is a storage device that stores the image information and the position information received by communicator 31, the computer program executed by information processing unit 32, and so forth. Storage 33 also stores, for example, a machine learning model to be described later. Storage 33 is more specifically implemented, for example, in the form of a semiconductor memory or a hard disk drive (HDD).

Positioning system 40 measures the position of first communication device 41 located in indoor space 60, on the basis of a state of communication between first communication device 41 in indoor space 60 and a plurality of second communication devices 42 disposed in indoor space 60. Positioning system 40 includes a plurality of first communication devices 41, the plurality of second communication devices 42, and positioning server device 43. Note that positioning system 40 is simply required to include at least one first communication device 41.

First communication device 41 is a beacon receiver (scanner) that receives a beacon signal transmitted by each of the plurality of second communication devices 42. First communication device 41 measures the received signal strength indicator (RSSI) of the received beacon signal, and transmits, to positioning server device 43, signal strength information in which the measured RSSI is associated with second identification information of second communication device 42 included in the beacon signal and first identification information of first communion device 41 per se. First communication device 41 is, for example, a mobile information terminal (e.g., smartphone) capable of operating as a beacon receiver, but may also be a device that is specific to beacon reception. As shown in FIG. 2, first communication device 41 is held by a person located in indoor space 60. Note that, as is described later, first communication device 41 also operates as a beacon receiver that receives a beacon signal transmitted by third communication device 50.

Second communication device 42 is a beacon transmitter that transmits a beacon signal. The beacon signal includes the second identification information of second communication device 42. As shown in FIG. 2, second communication device 42 is detachably connected, for example, to a power supply terminal included in lighting device 22 that is disposed on the ceiling of indoor space 60. Second communication device 42 operates on electric power supplied from lighting device 22. The power supply terminal is, for example, an USB terminal. Second communication device 42 may be fixed not via lighting device 22 but directly to the ceiling of indoor space 60. Second communication device 42 may also be fixed, for example, to a wall. Note that the plurality of second communication devices 42 are disposed in a two-dimensionally dispersed manner in a top view, as shown in FIG. 2. The layout (disposition position) of the plurality of second communication devices 42 is preliminarily stored in storage 46 as layout information.

Positioning server device 43 obtains, from first communication devices 41, items of signal strength information that correspond one to one to the plurality of second communication devices 42, and measures the position of first communication device 41 located in indoor space 60, on the basis of the items of signal strength information obtained. Positioning server device 43 is an edge computer provided in the facility (building) that includes indoor space 60, but may also be a cloud computer provided outside of such facility. Positioning server device 43 includes communicator 44, information processing unit 45, and storage 46.

Communicator 44 is a communication module (communication circuit) used by positioning server device 43 to communicate with the plurality of first communication devices 41 and server device 30. Communicator 44 receives, for example, the items of signal strength information that correspond one to one to the plurality of second communication devices 42 from each of the plurality of first communication devices 41. Communicator 44 also transmits position information of each object located in indoor space 60 to server device 30. Communication performed by communicator 44 may either be wireless communication or wired communication. A communications standard used for the communication is not limited to a specific communications standard.

Information processing unit 45 measures the position of first communication device 41, on the basis of the items of signal strength information received by communicator 44, and outputs position information indicating the measured position. Communicator 44 transmits the outputted position information to server device 30.

For example, information processing unit 45 measures the position of first communication device 41, on the basis of the items of signal strength information, transmitted by first communication device 41 held by person A, that correspond one to one to the plurality of second communication devices 42, and the layout information indicating the layout (disposition position) of the plurality of second communication devices 42 in indoor space 60. Information processing unit 45 then outputs position information (i.e., position information of person A) in which the measured position is associated with the first identification information of first communication device 41. Any known algorithm may be used as a method of performing position measurement on the basis of the items of signal strength information and the layout information.

Information processing unit 45 is more specifically implemented in the form of a processor or a microcomputer. The function of information processing unit 45 is realized by means of the processor or the microcomputer that forms information processing unit 45 executing a computer program stored in storage 46.

Storage 46 is a storage device that stores the signal strength information received by communicator 44, the layout information indicating the layout of the plurality of second communication devices 42, and the computer program executed by information processing unit 45, and so forth. Storage 46 also stores registration information that indicates what object is specifically indicated by third identification information to be described later. Storage 46 is more specifically implemented, for example, in the form of a semiconductor memory or an HDD.

Third communication device 50 is a beacon transmitter that transmits a beacon signal. Third communication device 50 is a beacon transmitter that is specialized for beacon signal transmission and has no function of communicating with, for example, server device 30 and positioning server device 43. As shown in FIG. 2, third communication device 50 is held by a tangible object located in indoor space 60. The tangible object is more specifically chair C (shown in FIG. 2), but may also be another object such as lighting device 22. Third communication device 50 may also be held by a person located in indoor space 60. Stated differently, third communication device 50 is simply required to be held by an object. A beacon signal includes third identification information of third communication device 50.

### [Example Operation 1 of Estimating Coordinates of First Communication Device]

As described above, positioning system 40 is capable of measuring the position of first communication device 41 (beacon receiver) held by a person, on the basis of the RSSI, observed at first communication device 41, of a beacon signal transmitted by each of the plurality of second communication devices 42. However, the accuracy of the position of first communication device 41 measured by positioning system 40 may not be so high. Also, positioning system 40 is incapable of directly measuring the position of a beacon transmitter such as third communication device 50.

In view of this, position estimation system 10 estimates the position of first communication device 41 with high accuracy, using image information of an image captured by camera 20, together with the position information of first communication device 41 provided by positioning system 40. The following describes example operation 1 of estimating the position (coordinates) of first communication device 41. FIG. 3 is a flowchart of example operation 1 of estimating the coordinates of first communication device 41.

Communicator 31 of server device 30 receives image information from camera 20 (S11). Information processing unit 32 stores the received image information onto storage 33. As described above, the image information is, for example, image information of an image in a top view of indoor space 60.

Subsequently, obtainer 34 obtains the image information received by communicator 31 and stored in storage 33 (S12). Estimator 35 estimates the coordinates of a person in indoor space 60, on the basis of the obtained image information (S13).

Estimator 35 estimates the position of the person in the image, for example, by performing, on the image information (image), object detection processing that utilizes deep learning (machine learning model), and converts the position of the person in the image into coordinates in indoor space 60. More specifically, estimator 35 performs object detection processing that is based on a method such as region-convolutional neural network (R-CNN), you only look at once (YOLO), and single shot multibox detector (SSD). These machine learning models for performing the object detection processing are constructed, for example, using, as training data, images obtained by imaging indoor spaces 60 (or another indoor space) from above.

Storage 33 stores table information that shows the correspondence between the position of each pixel in the image and its coordinates in indoor space 60. Using such table information, estimator 35 is capable of converting the position of the person in the image into the coordinates of the person in indoor space 60.

When the image is an image in a top view of indoor space 60, the coordinates of the position of the person estimated by estimator 35 are two-dimensional coordinates in a top view of indoor space 60.

Subsequently, communicator 31 receives, from positioning server device 43, items of position information indicating the positions of first communication devices 41, each of which is located in indoor space 60 (S14). Information processing unit 32 stores the items of position information received onto storage 33. FIG. 4 is a diagram that schematically shows the items of position information. As shown in FIG. 4, in each of the items of position information, the first identification information of the corresponding first communication device 41 is associated with the position (coordinates) of such first communication device 41. The position of first communication device 41 is, for example, two-dimensional coordinates in a top view of indoor space 60.

Subsequently, position information obtainer 36 obtains the items of position information received by communicator 31 and stored in storage 33 (S15). On the basis of the items of position information obtained, estimator 35 identifies first communication device 41 that is located closest to the estimated coordinates as first communication device 41 held by the person who is at the position of the coordinates estimated in step S13 (hereinafter also referred to as "target first communication device 41") (S16).

Subsequently, estimator 35 stores, onto storage 33, the first identification information included in the position information of the identified target first communication device 41 as the coordinate information, in association with the coordinates estimated in step S13 (S17).

According to the processes of step S11 through step S17, the coordinate information of the target first communication device 41 held by the person in indoor space 60 is stored onto storage 33.

As described above, position estimation system 10 is capable of estimating the coordinates of target first communication device 41 held by a person with high accuracy, on the basis of the image information and the position information obtained from positioning system 40.

Note that in example operation 1 of estimating the coordinates of first communication device 41, estimator 35 estimates the coordinates of a person in indoor space 60 by performing the object detection processing on the image information (image) obtained by obtainer 34. However, estimator 35 may also perform processing of dividing an image into regions. More specifically, estimator 35 may perform segmentation that utilizes deep learning (machine learning model). Estimator 35 is capable of estimating the coordinates of the person in indoor space 60, on the basis of the position of the region in the image showing such target object. The machine learning model for performing segmentation is constructed, for example, using, as training data, images obtained by imaging indoor spaces 60 (or another indoor space) from above.

### [Example Operation 1 of Estimating Coordinates of Object]

Position estimation system 10 is also capable of estimating the coordinates of third communication device 50 in indoor space 60 (stated differently, the coordinates of the object holding third communication device 50), using the estimated position of target first communication device 41. FIG. 5 is a flowchart of example operation 1 of estimating the coordinates of an object. Note that the following description of example operation 1 of estimating the coordinates of third communication device 50 assumes that the person holding target first communication device 41 moves, but the object holding third communication device 50 does not move.

Estimator 35 of server device 30 estimates the coordinates of target first communication device 41 (S21). The method of estimating the coordinates of target first communication device 41 is as described with reference to FIG. 3.

Here, target first communication device 41 receives a beacon signal transmitted by third communication device 50, and measures the RSSI of the received beacon signal. Target first communication device 41 also transmits, to positioning server device 43, signal strength information in which the measured RSSI is associated with the third identification information of third communication device 50 included in the beacon signal and the first identification information of target first communion device 41 per se.

Communicator 31 of server device 30 receives the signal strength information from target first communication device 41 (S22), and obtainer 34 obtains the received signal strength information (S23).

After the processes of step S21 through step S23 are repeated over time, estimator 35 is able to identify how the RSSI of the beacon signal received by target first communication device 41 from third communication device 50 changes when the coordinates of target first communication device 41 change. In view of this, estimator 35 estimates the coordinates of third communication device 50, i.e., the coordinates of the object holding third communication device 50, on the basis of changes in the RSSI (state of communication between third communication device 50 and first communication device 41) that are changes in response to the changes in the coordinates of target first communication device 41 (S24).

As is described above, assume here that the person holding target first communication device 41 moves and the object holding third communication device 50 does not move. It is then possible to consider that target first communication device 41 at time t1, target first communication device 41 at time t2, and target first communication device 41 at time t3 are three beacon receivers whose coordinates are already known and whose coordinates are different from each other. Stated differently, the process of step S24 can be treated the same way as the process of estimating the coordinates of the beacon transmitter (third communication device 50), using three beacon receivers whose coordinates are already known and whose coordinates are different from each other.

As described above, position estimation system 10 is capable of estimating the coordinates of third communication device 50, i.e., the coordinates of the object holding third communication device 50. In positioning system 40 included in position estimation system 10, the plurality of second communication devices 42 are beacon transmitters. For this reason, while capable of measuring the position of first communication device 41 (beacon receiver), positioning system 40 is incapable of directly measuring the position of third communication device 50 (beacon transmitter).

However, position estimation system 10 is capable of estimating the coordinates of the object holding third communication device 50, on the basis of changes in the state of communication between third communication device 50 and target first communication device 41 that are changes in response to the changes in the coordinates of target first communication device 41. Note that which third identification information specifically indicates what object is preliminarily registered in storage 33 of server device 30.

The following describes a specific use case. When lighting device 22 is newly disposed in indoor space 60 and third communication device 50 is attached to such newly disposed lighting device 22, for example, position estimation system 10 is able to estimate which position in indoor space 60 such new lighting device 22 was disposed (i.e., coordinates of newly disposed lighting device 22).

The coordinates of the object estimated by position estimation system 10 are provided, for example, by estimator 35 to an information terminal (not shown) such as a personal computer and a smartphone, and is visualized by such information terminal. This allows the user viewing the display of the information terminal to easily grasp the position of an object in indoor space 60. When the object is a tangible object, it becomes easier, for example, to grasp the position of the tangible object and perform a maintenance work for the tangible object.

Alternatively, the estimated coordinates of the object may be provided to a control device (not shown) that controls a device such as an air conditioner. When the object is a person, for example, the control device is capable of controlling the device, on the basis of the position of the person in indoor space 60.

### [Example Operation 2 of Estimating Coordinates of Object]

In example operation 1 of estimating the coordinates of an object, position estimation system 10 estimates the coordinates of the object holding third communication device 50 by tracking changes in the coordinates of single target first communication device 41. In contrast, position estimation system 10 is also capable of estimating the coordinates of the object holding third communication device 50 by estimating the coordinates of a plurality of target first communication devices 41. The following describes such example operation. FIG. 6 is a flowchart of example operation 2 of estimating the coordinates of an object.

First, estimator 35 of server device 30 estimates the coordinates of each of the plurality of target first communication devices 41 located in indoor space 60 (S31). Estimator 35 is capable of estimating the coordinates of the plurality of target first communication devices 41 by performing the operation (processing) shown in FIG. 3 on a plurality of persons shown in the image as targets. Stated differently, the plurality of target first communication devices 41 are held by mutually different persons.

As with example operation 1 of estimating the coordinates of an object, each target first communication device 41 receives a beacon signal transmitted by third communication device 50, and measures the RSSI of the received beacon signal. Each first communication device 41 also transmits, to positioning server device 43, signal strength information in which the measured RSSI is associated with the third identification information of third communication device 50 included in the beacon signal and the first identification information of target first communion device 41 per se.

Communicator 31 of server device 30 receives the signal strength information from each of the plurality of target first communication devices 41 (S32), and obtainer 34 obtains the items of signal strength information received (S33).

Estimator 35 estimates the coordinates of third communication device 50, i.e., the coordinates of the object holding third communication device 50, on the basis of the items of signal strength information obtained and the coordinates of the plurality of target first communication devices 41 estimated in step S31 (S34). The process of step S34 can be treated the same way as the process of estimating the coordinates of the beacon transmitter (third communication device 50), using a plurality of beacon receivers (the plurality of target first communication devices 41) whose coordinates are already known and whose coordinates are different from each other. When the coordinates of three or more target first communication devices 41 are estimated in step S31, estimator 35 is able to estimate the coordinates of third communication device 50 with high accuracy.

As described above, position estimation system 10 is capable of estimating the coordinates of third communication device 50, i.e., the coordinates of the object holding third communication device 50. In positioning system 40 included in position estimation system 10, the plurality of second communication devices 42 are beacon transmitters. For this reason, while capable of measuring the position of first communication device 41 (beacon receiver), positioning system 40 is incapable of directly measuring the position of third communication device 50 (beacon transmitter). However, position estimation system 10 estimates the coordinates of each of the plurality of target first communication devices 41 held by mutually different persons. Then, on the basis of the state of communication between third communication device 50 and the plurality of target first communication devices 41, and the estimated coordinates of the plurality of target first communication devices 41, position estimation system 10 is capable of estimating the coordinates of the object holding third communication device 50.

### [Embodiment 2]

### [Configuration]

The following describes the configuration of a position estimation system according to Embodiment 2. FIG. 7 is a block diagram showing the functional configuration of the position estimation system according to Embodiment 2. FIG. 8 is a diagram showing indoor space 60 to which the position estimation system according to Embodiment 2 is applied.

Position estimation system 10a is a system that obtains temperature distribution information indicating the temperature distribution of indoor space 60 outputted by infrared sensor 21, and estimates the coordinates of a target object, among the objects located in indoor space 60, on the basis of the obtained temperature distribution information.

As shown in FIG. 7 and FIG. 8, position estimation system 10a includes infrared sensor 21, server device 30, positioning system 40, and third communication device 50. Stated differently, position estimation system 10a includes infrared sensor 21 instead of camera 20. Note that position estimation system 10a may include a plurality of infrared sensors 21.

Of the elements included in position estimation system 10a, elements other than infrared sensor 21 are the same as those of Embodiment 1, and will not be described in detail.

Infrared sensor 21 is disposed, for example, on the ceiling of indoor space 60. Infrared sensor 21 generates temperature distribution information (hereinafter also described as "thermal image") that shows the temperature distribution in a top view of indoor space 60, and transmits the generated temperature distribution information to server device 30. Infrared sensor 21 is, for example, an infrared array sensor (thermal image sensor) that includes an array of 8 × 8 infrared detection elements. Stated differently, a thermal image generated by infrared sensor 21 has 8 × 8 pixels.

The thermal image shows the temperature distribution in the sensing range of infrared sensor 21 at the resolution of 8 × 8. FIG. 9 is a diagram that schematically shows the thermal image. Each of the 8 × 8 small regions in FIG. 9 represents a pixel included in the thermal image. The numeric value in each of the pixels is a pixel value which more specifically indicates a temperature. The temperature here is a surface temperature of indoor space 60. For simplicity of description, a pixel value is described as a temperature value in Embodiment 2 described below.

Note that infrared sensor 21 is not limited to an infrared array sensor, and thus may be, for example, a sensor that scans indoor space 60, using a single infrared detection element. Infrared sensor 21 may also be an infrared image sensor having relatively high resolution.

As shown in FIG. 8, infrared sensor 21 is detachably connected, for example, to a power supply terminal included in lighting device 22 that is disposed on the ceiling of indoor space 60. Infrared sensor 21 operates on electric power supplied from lighting device 22. The power supply terminal is, for example, an USB terminal. Infrared sensor 21 may be fixed not via lighting device 22 but directly to the ceiling of indoor space 60. Infrared sensor 21 may also be fixed, for example, to a wall to generate a thermal image that shows the temperature distribution in a lateral view of indoor space 60.

### [Example Operation 2 of Estimating Coordinates of First Communication Device]

Position estimation system 10a estimates with high accuracy the position of first communication device 41 (target first communication device 41) held by a person shown in an image, using the temperature distribution information obtained by infrared sensor 21, together with the position information of first communication device 41 provided by positioning system 40. The following describes example operation 2 of estimating the position (coordinates) of first communication device 41. FIG. 10 is a flowchart of example operation 2 of estimating the coordinates of first communication device 41.

Communicator 31 of server device 30 receives the temperature distribution information from infrared sensor 21 (S41). Information processing unit 32 stores the received temperature distribution information onto storage 33. As described above, the temperature distribution information indicates, for example, the temperature distribution in a top view of indoor space 60.

Subsequently, obtainer 34 obtains the temperature distribution information received by communicator 31 and stored in storage 33 (S42). Estimator 35 applies super-resolution technology to the obtained temperature distribution information to increase the resolution of the temperature distribution information (S43). In the following description of steps S43 and S44, the temperature distribution information is described as "thermal image".

For example, estimator 35 applies generative adversarial network for super-resolution (SRGAN) to the thermal image to increase the resolution of the thermal image. The method of increasing the resolution of the thermal image is not limited to SRGAN, and thus estimator 35 may apply super-resolution convolutional neural network (SRCNN) to the thermal image to increase the resolution of the thermal image. Estimator 35 may also increase the resolution of the thermal image by determining the average value of the pixel values (temperatures) of adjacent pixels to insert, between the adjacent pixels, a new pixel whose pixel value corresponds to such average value.

Such super-resolution technology allows the generation of a high-resolution thermal image from inexpensive infrared sensor 21. Note that it is not essential to apply the super-resolution technology to a thermal image, and thus the process of increasing the resolution of the thermal image may be omitted.

Subsequently, estimator 35 estimates the coordinates of the person in indoor space 60, on the basis of the thermal image (temperature distribution information) to which the super-resolution technology has been applied (S44).

Estimator 35 estimates the position of the person in the thermal image, for example, by performing, on the thermal image, object detection processing that utilizes deep learning (machine learning model), and converts the position of the person in the thermal image into coordinates in indoor space 60. More specifically, estimator 35 performs the object detection processing that is based on a method such as R-CNN, YOLO, and SSD. These machine learning models for performing the object detection processing are constructed, using, as training data, not typical color images, but thermal images obtained by imaging indoor space 60 (or another indoor space) from above.

Storage 33 stores table information that shows the correspondence between the position of each pixel in the thermal image and its coordinates in indoor space 60. Using such table information, estimator 35 is capable of converting the position of the person in the thermal image into the coordinates of the person in indoor space 60.

Note that when the thermal image shows the temperature distribution in a top view of indoor space 60, the coordinates of the position of the person estimated by estimator 35 are two-dimensional coordinates in a top view of indoor space 60.

The following processes of step S45 through step S48 are the same as those of steps S14 through S17 in Embodiment 1.

As described above, position estimation system 10a estimates with high accuracy the coordinates of target first communication device 41 held by a person, on the basis of the temperature distribution information and the position information obtained from positioning system 40. Note that position estimation system 10a may use any one of example operation 1 of estimating the coordinates of an object or example operation 2 of estimating the coordinates of an object that are described in Embodiment 1 as the operation of estimating the coordinates of third communication device 50 (coordinates of the object holding third communication device 50).

In example operation 2 of estimating the coordinates of first communication device 41, estimator 35 estimates the coordinates of the person in indoor space 60 by performing the object detection processing on the thermal image obtained by obtainer 34. However, estimator 35 may also perform processing of dividing a thermal image into regions. More specifically, estimator 35 may perform segmentation that utilizes deep learning (machine learning model). Estimator 35 is capable of estimating the coordinates of the person in indoor space 60, on the basis of the position of the region in the thermal image showing such person. The machine learning model for performing segmentation is constructed, for example, using, as training data, thermal images obtained by imaging indoor spaces 60 (or another indoor space) from above.

Estimator 35 may also estimate the coordinates of the person by performing, on the thermal image, information processing that is based on a rule-based algorithm and uses no machine learning model. For example, estimator 35 may perform processing of detecting a pixel whose pixel value is a local maximum value among a plurality of pixels included in the thermal image. Here, the pixel whose pixel value is a local maximum value refers to a pixel whose pixel value is a local maximum value in a two-dimensional arrangement of pixels. In other words, the pixel whose pixel value is a local maximum value refers to a pixel whose pixel value is greater than those of the surrounding pixels, when the pixel values that correspond to the same time in a two-dimensional arrangement of pixels are compared. A single thermal image can include a plurality of pixels whose pixel values are local maximum pixel values.

Assume here that no heat source whose temperature is higher than that of the person is present in indoor space 60. When a pixel whose pixel value is a local maximum value but is a small value (i.e., temperature is low), no person can be considered to be present in the position that corresponds to such pixel. In view of this, estimator 35 can estimate that a person is present in indoor space 60, when estimator 35 detects a pixel whose pixel value is a local maximum value and greater than or equal to a predetermined value (e.g., 30 °C or higher).

Also, estimator 35 is capable of estimating the coordinates of the position of the person in indoor space 60 by applying the foregoing table information to the position of the pixel whose pixel value is a local maximum value and greater than or equal to the predetermined value (e.g., 30 °C or higher).

Another example of the information processing that is based on a rule-based algorithm is processing of detecting temporal changes in pixel values (temperatures) of a plurality of pixels included in the thermal image. Assuming that no heat source other than the person is present in indoor space 60, and when no person is present in indoor space 60, temporal changes in pixel values (temperatures) of the plurality of pixels included in the thermal image are gradual. When a person enters indoor space 60 in such state, the pixel values of the pixels of the portion in the thermal image showing the person rapidly change (rise). By monitoring the temporal changes in the pixel values of the plurality of pixels, estimator 35 is able to estimate that a person is present in indoor space 60, when a rapid rise occurs in the pixel values.

Estimator 35 is also able to estimate the coordinates of the position of the person in indoor space 60 by applying the foregoing table information to the position of a pixel whose pixel values has risen rapidly.

### [Variation of Positioning System]

Positioning system 40 measures the position of first communication device 41, on the basis of the RSSI, observed at first communication device 41, of the beacon signal transmitted by each of the plurality of second communication devices 42. Here, position estimation system 10 or position estimation system 10a may include another positioning system instead of positioning system 40. Such other positioning system is, for example, a positioning system that measures the position of a first communication device, on the basis of the RSSI, observed at each of a plurality of second communication devices, of the beacon signal transmitted by the first communication device. Stated differently, position estimation system 10 or position estimation system 10a may include a positioning system in which the relationship between transmission and reception of beacon signals is reversed with respect to positioning system 40.

The following describes the positioning system according to such variation. FIG. 11 is a block diagram showing the functional configuration of the positioning system according to a variation. FIG. 12 is a diagram showing indoor space 60 to which the positioning system according to the variation is applied. Note that FIG. 11 also shows server device 30 and third communication device 50.

As shown in FIG. 11 and FIG. 12, positioning system 70 measures the position of an object located in indoor space 60, on the basis of a state of communication between first communication device 71 located in indoor space 60 and a plurality of second communication devices 72 disposed in indoor space 60. Positioning system 70 includes a plurality of first communication devices 71, the plurality of second communication devices 72, and positioning server device 73. Note that positioning system 70 is simply required to include at least one first communication device 71.

First communication device 71 is a beacon transmitter that transmits a beacon signal. First communication device 71 is, for example, a mobile information terminal (e.g., smartphone) capable of operating as a beacon transmitter, but may also be a device that is specific to beacon transmission. As shown in FIG. 12, first communication device 71 is held by a person located in indoor space 60. The beacon signal includes the first identification information of first communication device 71.

Note that, as with first communication device 41, first communication device 71 also operates as a beacon receiver that receives a beacon signal transmitted by third communication device 50. More specifically, first communication device 71 receives a beacon signal transmitted by third communication device 50, and measures the RSSI of the received beacon signal. First communication device 71 also transmits, to positioning server device 73, signal strength information in which the measured RSSI is associated with the third identification information of third communication device 50 included in the beacon signal and the first identification information of first communion device 71 per se.

Second communication device 72 is a beacon receiver (scanner) that receives a beacon signal transmitted by first communication device 71. Second communication device 72 also measures the received signal strength indicator (RSSI) of the received beacon signal, and transmits, to positioning server device 73, signal strength information in which the measured RSSI is associated with the first identification information included in the beacon signal and the second identification information of second communication device 72 per se.

As shown in FIG. 12, second communication device 72 is detachably connected, for example, to a power supply terminal included in lighting device 22 that is disposed on the ceiling of indoor space 60. Second communication device 72 operates on electric power supplied from lighting device 22. The power supply terminal is, for example, an USB terminal. Second communication device 72 may be fixed not via lighting device 22 but directly to the ceiling of indoor space 60. Second communication device 72 may also be fixed, for example, to a wall. Note that the plurality of second communication devices 72 are disposed in a two-dimensionally dispersed manner in a top view, as shown in FIG. 12.

Positioning server device 73 obtains, from each of the plurality of second communication devices 72, the signal strength information of the beacon signal transmitted by first communication device 71, and measures the position of first communication device 71 on the basis of the obtained signal strength information. Positioning server device 73 is an edge computer provided in the facility (building) that includes indoor space 60, but may also be a cloud computer provided outside of such facility. Positioning server device 73 includes communicator 74, information processing unit 75, and storage 76.

Communicator 74 is a communication module (communication circuit) used by positioning server device 73 to communicate with the plurality of second communication devices 72 and server device 30. Communicator 74 receives, for example, the signal strength information from each of the plurality of second communication devices 72. Communicator 74 also transmits position information of each object located in indoor space 60 to server device 30. Communication performed by communicator 74 may either be wireless communication or wired communication. A communications standard used for the communication is not limited to a specific communications standard.

Information processing unit 75 measures the position of first communication device 71, on the basis of the items of signal strength information received by communicator 74, and outputs position information indicating the measured position. Communicator 74 transmits the outputted position information to server device 30.

For example, information processing unit 75 measures the position of first communication device 71, on the basis of the first identification information included in the beacon signal transmitted by first communication device 71, the items of signal strength information, each including the second identification information of the corresponding second communication device 72 per se, and the layout information indicating the layout (disposition position) of the plurality of second communication devices 72 in indoor space 60. Information processing unit 75 then outputs position information in which the measured position is associated with the first identification information of first communication device 71. The layout information is more specifically information in which the second identification information of second communication device 72 is associated with the coordinates of the position at which second communication device 72 is disposed (two-dimensional coordinates). Any known algorithm may be used as a method of performing position measurement on the basis of the items of signal strength information and the layout information.

Information processing unit 75 is more specifically implemented in the form of a processor or a microcomputer. The function of information processing unit 75 is realized by means of the processor or the microcomputer that forms information processing unit 75 executing a computer program stored in storage 76.

Storage 76 is a storage device that stores the signal strength information received by communicator 74, the layout information indicating the layout of the plurality of second communication devices 72, and the computer program executed by information processing unit 75, and so forth. Storage 76 is more specifically implemented, for example, in the form of a semiconductor memory or an HDD.

As described above, positioning system 70 is capable of measuring the position of first communication device 71, on the basis of the RSSI, observed at first communication device 71, of the beacon signal transmitted by each of the plurality of second communication devices 72. More specifically, positioning system 70 is capable of measuring what object is located in which position in indoor space 60. Position estimation system 10 or position estimation system 10a may include positioning system 70 instead of positioning system 40. In this case, position information obtainer 36 of server device 30 obtains the position information from positioning system 70, and obtainer 34 obtains the signal strength information from first communication device 71.

### [Summary]

As described above, position estimation system 10 or position estimation system 10a includes: obtainer 34 that obtains information which is one of image information of an image showing indoor space 60 in which a person is located or temperature distribution information of indoor space 60; estimator 35 that estimates coordinates of the person in indoor space 60, on the basis of the information obtained; and position information obtainer 36 that obtains position information of each of one or more first communication devices located in indoor space 60 from a positioning system that measures a position of the first communication device on the basis of a state of communication between the first communication device and a plurality of second communication devices disposed in indoor space. Estimator 35: estimates coordinates of a target first communication device held by the person, on the basis of the coordinates of the person estimated and the position information obtained, the target first communication device being included in the one or more first communication devices; and estimates coordinates of an object other than the person in indoor space 60, on the basis of a state of communication between third communication device 50 held by the object and the target first communication device, and the coordinates of the target first communication device estimated. Here, the positioning system is positioning system 40 or positioning system 70, the first communication device is first communication device 41 or first communication device 71, and the second communication device is second communication device 42 or second communication device 72.

Such position estimation system 10 or position estimation system 10a is capable of estimating the coordinates of an object in indoor space 60.

Also, for example, estimator 35 estimates the coordinates of the object, on the basis of a change in the state of communication between third communication device 50 and the target first communication device, the change being a change in response to a temporal change in the coordinates of the target first communication device.

Such position estimation system 10 or position estimation system 10a is capable of estimating the coordinates of an object in indoor space 60, on the basis of information relating to a single target first communication device.

Also, for example, estimator 35: estimates the coordinates of each of a plurality of target first communication devices held by mutually different persons, the plurality of target first communication devices each being the target first communication device; and estimates the coordinates of the object in indoor space 60, on the basis of a state of communication between third communication device 50 and the plurality of target first communication devices, and the coordinates of each of the plurality of target first communication devices estimated.

Such position estimation system 10 or position estimation system 10a is capable of estimating the coordinates of an object in indoor space 60, on the basis of information relating to the plurality of target first communication devices.

Also, in position estimation system 10, obtainer 34 obtains the image information of the image in a top view of indoor space 60. Estimator 35 estimates the coordinates of the person, on the basis of the image information obtained. The coordinates are two-dimensional coordinates in a top view of indoor space 60.

Such position estimation system 10 is capable of estimating the coordinates of an object in indoor space 60, on the basis of the image information.

Also, in position estimation system 10a, obtainer 34 obtains the temperature distribution information indicating a temperature distribution of indoor space 60 in a top view of indoor space 60. Estimator 35 estimates the coordinates of the person, on the basis of the temperature distribution information obtained. The coordinates are two-dimensional coordinates in the top view of indoor space 60.

Such position estimation system 10a is capable of estimating the coordinates of an object in indoor space 60, on the basis of the temperature distribution information.

Also, for example, positioning system 40 measures the position of first communication device 41, on the basis of a received signal strength indicator of a beacon signal transmitted by each of the plurality of second communication devices 42, the received signal strength indicator being observed at first communication device 41.

Such position estimation system 10 or position estimation system 10a is capable of estimating the coordinates of an object in indoor space 60, on the basis of the position information provided by positioning system 40.

Also, for example, positioning system 70 measures the position of first communication device 71, on the basis of a received signal strength indicator of a beacon signal transmitted by first communication device 71, the received signal strength indicator being observed at each of the plurality of second communication devices 72.

Such position estimation system 10 or position estimation system 10a is capable of estimating the coordinates of an object in indoor space 60, on the basis of the position information provided by positioning system 70.

Also, for example, the object is an object other than a person.

Such position estimation system 10 or position estimation system 10a is capable of estimating the coordinates of an object (tangible object) other than a person in indoor space 60.

Also, for example, the object is a person.

Such position estimation system 10 or position estimation system 10a is capable of estimating the coordinates of a person in indoor space 60.

Also, the position estimation method executed by a computer such as position estimation system 10 or position estimation system 10a includes: obtaining information which is one of image information of an image showing indoor space 60 in which a person is located or temperature distribution information of indoor space 60; estimating coordinates of the person in indoor space 60, on the basis of the information obtained; obtaining position information of each of one or more first communication devices located in indoor space 60 from a positioning system that measures a position of the first communication device on the basis of a state of communication between the first communication device and a plurality of second communication devices disposed in indoor space 60; estimating coordinates of a target first communication device held by the person, on the basis of the coordinates of the person estimated and the position information obtained, the target first communication device being included in the one or more first communication devices; and estimating coordinates of an object other than the person in indoor space 60, on the basis of a state of communication between third communication device 50 held by the object and the target first communication device, and the coordinates of the target first communication device estimated.

Such position estimation method is capable of estimating the coordinates of an object in indoor space 60.

### [Other Embodiment]

The position estimation system and the position estimation method according to the embodiments have been described above, but the present invention is not limited to the foregoing embodiments.

In the foregoing embodiments, the position estimation system is realized by means of a plurality of devices, but may also be realized by means of a single device. For example, the position estimation system may be realized by means of a single device that corresponds to a server device. When the position estimation system is realized by means of a plurality of devices, the elements included in the position estimation system may be allocated to the plurality of devices in any manner. For example, the server device may include some or all of the functions of the positioning server device.

Also, in the foregoing embodiments, processing performed by a specified processing unit may be performed by another processing unit. Also, the processing order of a plurality of processes may be changed, and a plurality of processes may be performed in parallel.

Each of the elements in the foregoing embodiments may be realized by executing a software program suitable for the element. Each of the elements may be realized by means of a program executing unit, such as a CPU and a processor, reading and executing the software program recorded on a recording medium such as a hard disk or a semiconductor memory.

Also, each of the elements may also be configured in the form of a hardware product. For example, the elements may be configured in the form of circuits (or integrated circuits). These circuits may form a single circuit as a whole, or may be individual circuits. Each of these circuits may be a general-purpose circuit or an exclusive circuit.

Also, general or specific aspects of the present invention may be implemented in the form of a system, a device, a method, an integrated circuit, a computer program, or a computer-readable recording medium such as a CD-ROM. These general and specific aspects may also be implemented using any combination of systems, devices, methods, integrated circuits, computer programs, or recording media.

The present invention may be realized, for example, in the form of a position estimation method executed by a computer such as the position estimation system. The present invention may also be realized in the form of a program for causing a computer to execute the position estimation method, or as a non-transitory, computer-readable recording medium having recorded thereon such program.

The scope of the present invention also includes an embodiment achieved by making various modifications to each of the embodiments that can be conceived by those skilled in the art or an embodiment achieved by freely combining elements and functions in the embodiments without departing from the essence of the present invention.

### [Reference Signs List]

10, 10a position estimation system
20 camera
21 infrared sensor
22 lighting device
30 server device
31, 44, 74 communicator
32, 45, 75 information processing unit
33, 46, 76 storage
34 obtainer
35 estimator
36 position information obtainer
40, 70 positioning system
41, 71 first communication device
42, 72 second communication device
43, 73 positioning server device
50 third communication device
60 indoor space (space)

## Claims

1. A position estimation system comprising:
an obtainer that obtains information which is one of image information of an image showing a space in which a person is located or temperature distribution information of the space;
an estimator that estimates coordinates of the person in the space, based on the information obtained; and
a position information obtainer that obtains position information of each of one or more first communication devices located in the space from a positioning system that measures a position of the first communication device based on a state of communication between the first communication device and a plurality of second communication devices disposed in the space,
wherein the estimator:
estimates coordinates of a target first communication device held by the person, based on the coordinates of the person estimated and the position information obtained, the target first communication device being included in the one or more first communication devices; and
estimates coordinates of an object other than the person in the space, based on a state of communication between a third communication device held by the object and the target first communication device, and the coordinates of the target first communication device estimated.

2. The position estimation system according to claim 1,
wherein the estimator estimates the coordinates of the object, based on a change in the state of communication between the third communication device and the target first communication device, the change being a change in response to a temporal change in the coordinates of the target first communication device.

3. The position estimation system according to claim 1,
wherein the estimator:
estimates the coordinates of each of a plurality of target first communication devices held by mutually different persons, the plurality of target first communication devices each being the target first communication device; and
estimates the coordinates of the object in the space, based on a state of communication between the third communication device and the plurality of target first communication devices, and the coordinates of each of the plurality of target first communication devices estimated.

4. The position estimation system according to claims 1 to 3,
wherein the obtainer obtains the image information of the image in a top view of the space,
the estimator estimates the coordinates of the person, based on the image information obtained, and
the coordinates are two-dimensional coordinates in the top view of the space.

5. The position estimation system according to claims 1 to 3,
wherein the obtainer obtains the temperature distribution information indicating a temperature distribution of the space in a top view of the space,
the estimator estimates the coordinates of the person, based on the temperature distribution information obtained, and
the coordinates are two-dimensional coordinates in the top view of the space.

6. The position estimation system according to claims 1 to 3,
wherein the positioning system measures the position of each of the one or more first communication devices, based on a received signal strength indicator of a beacon signal transmitted by each of the plurality of second communication devices, the received signal strength indicator being observed at the first communication device.

7. The position estimation system according to claims 1 to 3,
wherein the positioning system measures the position of each of the one or more first communication devices, based on a received signal strength indicator of a beacon signal transmitted by the first communication device, the received signal strength indicator being observed at each of the plurality of second communication devices.

8. The position estimation system according to claims 1 to 3,
wherein the object is an object other than a person.

9. The position estimation system according to claims 1 to 3,
wherein the object is a person.

10. A position estimation method comprising:
obtaining information which is one of image information of an image showing a space in which a person is located or temperature distribution information of the space;
estimating coordinates of the person in the space, based on the information obtained;
obtaining position information of each of one or more first communication devices located in the space from a positioning system that measures a position of the first communication device based on a state of communication between the first communication device and a plurality of second communication devices disposed in the space;
estimating coordinates of a target first communication device held by the person, based on the coordinates of the person estimated and the position information obtained, the target first communication device being included in the one or more first communication devices; and
estimating coordinates of an object other than the person in the space, based on a state of communication between a third communication device held by the object and the target first communication device, and the coordinates of the target first communication device estimated.

11. A program for causing a computer to execute the position estimation method according to claim 10.
